# EUROPÄISCHE PATENTSCHRIFT

(11) **EP 4 259 973 B1**
(45) Veröffentlichungstag und Bekanntmachung des Hinweises auf die Patenterteilung: **08.01.2025**
(21) Anmeldenummer: 21816340.0
(22) Anmeldetag: 16.11.2021
(51) Int. Cl.: F24C 7/08, D06F 34/32, F25D 29/00, G06F 3/041, H05B 6/12

(54) **BEDIENVORRICHTUNG FÜR EIN HAUSHALTSGERÄT MIT EINEM INTEGRIERTEN BERÜHRSENSITIVEN BEDIENRING IN EINER BEDIENMULDE**
OPERATING DEVICE FOR A HOUSEHOLD APPLIANCE COMPRISING AN INTEGRATED TOUCH-SENSITIVE OPERATING RING IN AN OPERATING DEPRESSION
DISPOSITIF DE FONCTIONNEMENT POUR UN APPAREIL ÉLECTROMÉNAGER COMPRENANT UN ANNEAU DE FONCTIONNEMENT TACTILE INTÉGRÉ DANS UNE DÉPRESSION DE FONCTIONNEMENT

(30) Priorität: 08.12.2020 DE 102020215501
(43) Veröffentlichungstag der Anmeldung: 18.10.2023
(73) Patentinhaber: BSH Hausgeräte GmbH, 81739 München (DE)
(72) Erfinder: GOSS, Ulrich, 81739 München (DE); MARSCH, Alexander, 83620 Feldkirchen-Westerham (DE); ORTMANN, Christoph, 81675 München (DE); RUSSO, Alice, 81675 München (DE); SACHON, Robert, 80469 München (DE); VAAS, Jonas, 73479 Ellwangen/Jagst (DE)
(86) Internationale Anmeldenummer: PCT/EP2021/081822
(87) Internationale Veröffentlichungsnummer: WO 2022/122316

(56) Entgegenhaltungen:
- WO-A1-2007/025858
- WO-A1-2012/080155
- WO-A1-2015/141966
- CN-A- 105 787 421
- DE-A1- 102015 222 562
- DE-A1- 102017 118 451
- DE-A1- 102018 215 789
- US-B2- 10 551 958

## Beschreibung

Ein Aspekt der Erfindung betrifft eine Bedienvorrichtung für ein Haushaltsgerät. Die Bedienvorrichtung weist eine optische Anzeigeeinheit auf. Darüber hinaus weist die Bedienvorrichtung einen berührsensitiven Bedienring auf, der im Flächenbereich der optischen Anzeigeeinheit ausgebildet ist. Die optische Anzeigeeinheit ist mit einer transparenten Abdeckung abgedeckt. Eine Oberseite der Abdeckung weist eine Vertiefung auf. Durch diese Vertiefung ist die Geometrie des Bedienrings vorgegeben beziehungsweise definiert. Ein weiterer Aspekt der Erfindung betrifft ein Haushaltsgerät mit einer derartigen Bedienvorrichtung.

Bedienvorrichtungen für Haushaltsgeräte mit berührsensitiven Bedienbereichen sind vielfältigst bekannt. In dem Zusammenhang ist auch aus der DE 10 2005 002 952 A1 eine Ausgestaltung bekannt, bei welcher an einer Oberseite einer Abdeckung einer Lichtanzeige eine ortsfeste Rinne ausgebildet ist. Diese Rinne gilt als geometrische Vorgabe für den Bedienring. In dieser Rinne kann ein Nutzer mit seinem Finger berührend entlangstreifen, um somit eine entsprechende berührsensitive Bedienung auszulösen. Die Rinne ist als ovaler Ring ausgebildet. In dem von der umlaufend geschlossenen Rinne umrahmten Flächenbereich ist ein berührsensitives Einstellmittel ausgebildet. In einem Durchmesserquerschnitt der Rinne weist diese zwei beabstandet zueinander angeordnete U-Konturen auf. Diese U-Konturen sind in diesem Querschnitt betrachtet an den einander zugewandten, inneren U-Schenkeln mit einer Gerade verbunden, die den zur Rinne separaten Bereich darstellt. Die Gerade endet an den oberen Enden dieser inneren U-Schenkel. Die Bedienmöglichkeit bei diesem ovalen Ring ist eingeschränkt. Da die Rinne in ihrer Geometrie fest ist, können Nutzer mit verschieden dicken Fingern die Bedienung nur bedingt oder schlecht ausführen, da der Finger beispielweise mit seiner Kuppe nicht ganz in die Rinnen passt. Daher kann es zu Fehlbedienungen kommen oder der Nutzer hat ein unangenehmes Gefühl, wenn er die Fingerkuppe in die Rinnen pressen muss.

Da Bedienvorrichtungen immer vielfältigere Informationen, insbesondere auch optisch, anzeigen sollen und in dem Zusammenhang auch Bilddarstellungen möglich sein sollen, andererseits der Aufbau kompakt sein soll, ist einerseits eine Informationsüberfrachtung eines Nutzers zu vermeiden, andererseits sind die anzuzeigenden Informationen intuitiv wahrnehmbar und verständlich zu präsentieren.

Die WO 2015/141966 A1 zeigt eine Berührungsvorrichtung mit einem Anzeigefeld und einem Berührungsfeld, das auf dem Anzeigefeld angeordnet ist und eine gekrümmte Oberfläche aufweist. Zwischen dem Anzeigefeld und dem Berührungsfeld ist ein Luftspalt ausgebildet, um Erosion und Defekte an Komponenten, die durch das Eindringen von Feuchtigkeit in den Luftspalt verursacht werden, zu verhindert.

Die WO 2007/025858 A1 zeigt ein Element, das zumindest teilweise für optische Signale durchlässig ist und auf dessen Unterseite sich mindestens zwei optische Sende-Empfangs-Einheiten zur Detektion einer Berührung der Oberseite des Elements befinden. Dem Element ist mindestens ein Schaltelement zugeordnet, dessen Aktoren in der Ebene der Oberseite des Elements liegen.

Die DE 10 2015 222 562 A1 zeigt eine Berührungseingabevorrichtung für ein Fahrzeug, die mit einem Berührungsbereich versehen ist, an dem eine Berührungsgeste eingegeben wird, und einem Prozessor zum Unterteilen des Berührungsbereichs in einen ersten Bereich und einen zweiten Bereich. Wenn die Berührungsgeste an dem ersten Bereich eingegeben wird erfolgt ein Durchführen einer ersten Funktion. Ein Durchführen einer zweiten Funktion, die sich von der ersten Funktion unterscheidet, erfolgt, wenn die Berührungsgeste an dem zweiten Bereich eingegeben wird.

Es ist Aufgabe der vorliegenden Erfindung, eine Bedienvorrichtung sowie ein Haushaltsgerät zu schaffen, bei welchem die Bedienung eines integrierten Bedienrings ergonomisch verbessert ist.

Diese Aufgabe wird durch eine Bedienvorrichtung gemäß dem unabhängigen Anspruch gelöst.

Die Erfindung betrifft eine Bedienvorrichtung für ein Haushaltsgerät. Die Bedienvorrichtung weist eine optische Anzeigeeinheit auf. Darüber hinaus weist die Bedienvorrichtung einen berührsensitiven Bedienring auf. Dieser stellt einen berührsensitiven Bedienbereich dar. Der Bedienring ist im Flächenbereich der optischen Anzeigeeinheit ausgebildet. Dies bedeutet, dass bei einer Projektionsbetrachtung von vorne auf die Bedienvorrichtung der Bedienring zumindest teilweise, insbesondere vollständig, in der Fläche der optischen Anzeigeeinheit angeordnet ist. Die optische Anzeigeeinheit ist mit einer dazu separaten, transparenten Abdeckung der Bedienvorrichtung frontseitig abgedeckt. An einer Oberseite beziehungsweise Frontseite der Abdeckung ist eine Vertiefung ausgebildet. Diese Vertiefung ist durch eine Vertiefungswand begrenzt. Die Vertiefung ist als Ganzes betrachtet als zusammenhängende Mulde ausgebildet. Die Mulde ist kraterartig ausgebildet. Diesbezüglich kann sie auch beispielsweise kesselartig oder trichterartig oder schalenförmig oder sacklochartig bezeichnet werden. Die Vertiefungswand dieser Mulde ist insbesondere kugelteiloberflächenartig gebildet. Dies bedeutet, dass diese gesamte Vertiefungswand insbesondere die Form einer Teiloberfläche einer Kugel aufweist. Insbesondere kann diese eine Teiloberfläche eines Kugelsegments sein. Die gesamte Vertiefungswand ist unter dem Niveau eines an die Mulde angrenzenden Flächenbereichs der Oberseite ausgebildet. Zumindest eine obere, ringförmige Teilfläche der Vertiefungswand bildet eine Berühroberfläche des Bedienrings. Der Bedienring ist feststehend. Er ist in die Abdeckung integriert und somit einstückig damit ausgebildet. Die Vertiefungswand weist eine zur Berühroberfläche separate, weitere Teilfläche auf. Diese weitere Teilfläche schließt an die Berühroberfläche nach unten hin an. Dies ist in Richtung der Muldentiefe betrachtet zu verstehen. Die Mulde weist diesbezüglich eine Muldenachse auf, die senkrecht auf der Oberseite der Abdeckung steht. Durch eine derartige Ausgestaltung einer Vertiefung kann ein verbessertes Bedienkonzept erreicht werden. Da die lichte Weite der Vertiefung groß ist, kann ein Eingreifen in die Mulde für einen Nutzer mit einem Finger einfach erfolgen. Die lichte Weite ist insbesondere ein Vielfaches einer Dicke einer Fingerkuppe eines Fingers. Ein Anstoßen an sehr engen Kanten einer Rinne, wie dies im Stand der Technik der Fall ist, kann vermieden werden. Darüber hinaus muss der Finger mit seiner Kuppe nicht mehr in eine sehr schmale und vorgegebene Rinne eingepresst werden und in dieser Rinne dann entlanggeführt werden. Ein unerwünschtes Bediengefühl durch einen derartig beengt in die Rinne eingedrückten Finger kann somit mit der Erfindung vermieden werden. In einer Querschnittgeometrie betrachtet ist somit von einem oberen Ringrand der Mulde aus betrachtet nur ein Luftraum zwischen gegenüberliegenden Ringrandbereichen gebildet. Über den gesamten Durchmesser des Bedienrings betrachtet ist somit bei dieser Querschnittbetrachtung nur ein Luftraum zwischen diesen oberen Ringrandpunkten gebildet. Darüber hinaus ist durch dieses Konzept auch eine verbesserte Bedienung und Anzeigemöglichkeit erreicht. Die Vertiefung ist somit keine umlaufende kanalartige Rinne, sondern, wie bereits oben dargelegt, eine kraterartige, zusammenhängende Mulde. Der Eingang der Mulde ist somit kein Ring, sondern eine eckenfreie zusammenhängende Luftfläche. Diese kann eine Kreisfläche oder eine Ovalfläche sein.

Nicht zuletzt ist durch eine derartige Ausgestaltung auch eine verbesserte optische Darstellung von Informationen über den Bereich der Vertiefung ermöglicht. Es kann somit über die gesamte Fläche der Mulde, die durch die Vertiefungswand begrenzt ist, eine optische Anzeige erfolgen. Die Wahrnehmbarkeit ist durch diese Ausgestaltung verbessert und die Darstellung auch von zusammenhängenden Bildern ermöglicht. In einer Rinne, wie es im Stand der Technik der Fall ist, ist dies grundsätzlich nicht möglich.

Erfindungsgemäß ist an einer Unterseite der Abdeckung eine Bedruckung ausgebildet. Die Unterseite ist dabei diejenige Seite der Abdeckung, die der optischen Anzeigeeinheit zugewandt ist. Durch die Bedruckung ist die Fläche des Bedienrings an der Oberseite in einem Ausführungsbeispiel optisch gekennzeichnet. Damit kann ein Betrachter der Bedienvorrichtung bei Blick auf die Mulde auch den Bedienring in seiner Fläche einfach erkennen.

Erfindungsgemäß ist daher die Bedruckung als Ring an dieser Unterseite ausgebildet. Zudem weist dieser Ring eine radiale Ringdicke auf, die dem radialen Maßunterschied zwischen einer Oberkante des Bedienrings und einer Unterkante des Bedienrings entspricht. Die Oberkante des Bedienrings ist durch einen oberen Ringrand gebildet. Die Unterkante des Bedienrings ist durch einen unteren Ringrand gebildet. Dadurch kann das Ausmaß der Bedruckung minimiert werden und dennoch bei entsprechender Betrachtung der Mulde von vorne die Fläche des Bedienrings eindeutig und umfänglich erkannt werden. Die Bedruckung kann semitransparent ausgebildet sein. Dadurch kann auch eine vollflächige optische Darstellung von Informationen der optischen Anzeigeeinheit über das gesamte Flächenmaß der Vertiefungswand erfolgen.

In einem Ausführungsbeispiel ist die weitere Teilfläche eben ausgebildet. Bei einem derartigen Ausführungsbeispiel ist somit der Boden dieser Mulde nicht gekrümmt, sondern eben. Diese ebene weitere Teilfläche ist gegenüber dem an die Mulde direkt angrenzenden Flächenbereich der Oberseite der Abdeckung nach unten abgesenkt. Durch ein derartiges Ausführungsbeispiel kann quasi eine ebene Auflagefläche bereitgestellt werden, sodass gegebenenfalls der Finger nicht zu tief in die Mulde eintaucht und gestützt wird.

In einem Ausführungsbeispiel ist diese weitere Teilfläche der Vertiefungswand uneben ausgebildet. Dadurch ergeben sich vielfältige Möglichkeiten. Dies einerseits im Hinblick auf ein weiteres Eintauchen des Fingers in die Mulde. Andererseits kann dadurch auch eine individuelle optische Anzeige präsentiert werden. Auch spezifische optische Effekte, wie Vergrößerungen und Verkleinerungen, können dadurch ermöglicht werden.

In einem Ausführungsbeispiel ist diese weitere Teilfläche konkav gewölbt. Insbesondere ist sie über ihre gesamte Erstreckung konkav gewölbt. Dies ist ein sehr vorteilhaftes Ausführungsbeispiel, da somit die Mulde auch einfach hergestellt werden kann. Denn sie kann dann durch ein Fräsen in die Oberseite der Abdeckung sehr formpräzise und leicht hergestellt werden. Beispielsweise kann hier ein Fräsen mit einem Kugelkopf erfolgen. Damit kann eine entsprechend symmetrische Form der Mulde in diese Oberseite gefräst werden. Bei diesem Ausführungsbeispiel weist die Vertiefungswand dann exakt eine Kugelteiloberfläche als Form auf.

Möglich ist es auch, dass die zweite Teilfläche konvex gewölbt ist.

In einem Ausführungsbeispiel ist die ringförmige Berühroberfläche gewölbt. Dies hat Vorteile bei der Herstellung, wie sie oben genannt wurde. Denn dann kann mit einer Kugelkopffräse die gesamte Vertiefungswand erzeugt werden. Die diesbezüglich konkav gewölbte Form der ringförmigen Berühroberfläche wird dann automatisch mit erreicht. Damit lässt sich auch ein haptisch verbessertes Anlagekonzept für einen Finger an dieser Berühroberfläche erreichen.

In einem Ausführungsbeispiel ist der Radius der Wölbung der ringförmigen Berühroberfläche gleich dem Radius der weiteren Teilfläche. Damit ist ein stufenloser Übergang zwischen der Berühroberfläche und der weiteren Teilfläche erreicht. Darüber hinaus kann durch dieses Ausführungsbeispiel die Mulde besonders einfach durch einen einzigen Kugelkopffräser erzeugt werden.

In einem Ausführungsbeispiel ist der Radius der Wölbung der ringförmigen Berühroberfläche unterschiedlich zum Radius der weiteren Teilfläche. Insbesondere ist der Radius der Wölbung der ringförmigen Berühroberfläche größer als der Radius der weiteren Teilfläche. Eine derartige Geometrie kann beispielsweise durch zwei unterschiedlich dimensionierte Kugelkopffräser erzeugt werden. Bei einem derartigen Ausführungsbeispiel kann somit auch ein haptisch wahrnehmbarer Übergang zwischen der Berühroberfläche und der weiteren Teilfläche erzielt werden. Diesbezüglich ist somit ein gestufter Übergang ausgebildet. Dieser Übergang kann sehr minimalistisch erzeugt werden, beispielsweise dadurch, dass die Radien nur sehr geringfügig unterschiedlich sind. Insbesondere ist dadurch die optische Darstellung von Informationen über den gesamten Flächenbereich der Vertiefung quasi nicht beeinträchtigt. Dieser geringfügige, haptisch wahrnehmbare gestufte Übergang beeinträchtigt die optische Anzeige über die gesamte Vertiefungswand hinweg nicht.

In einem Ausführungsbeispiel ist zwischen der Abdeckung und der dazu separaten optischen Anzeigeeinheit eine Berührsensorik der Bedienvorrichtung angeordnet. Diese kann vollflächig ausgebildet sein und über die gesamte Fläche der optischen Anzeigeeinheit ausgebildet sein. Sie kann jedoch auch nur über eine Teilfläche der optischen Anzeigeeinheit ausgebildet sein. Insbesondere kann sie zumindest über denjenigen Flächenbereich ausgebildet sein, über den sich bei einer Projektionsbetrachtung die Mulde erstreckt.

In einem Ausführungsbeispiel ist eine Oberkante beziehungsweise ein oberer Ringrand des Bedienrings durch die Oberkante der Mulde gebildet. Ein oberer Ringrand des Bedienrings ist somit durch einen oberen Begrenzungsrand der Mulde gebildet. Diesbezüglich ist mit der Begrifflichkeit "oben" und "unten" die jeweilige Position entlang einer Muldenachse zu verstehen. Die Muldenachse ist diesbezüglich senkrecht zur Oberseite der Abdeckung orientiert. Der obere Ringrand und der untere Ringrand des Bedienrings und somit auch die Oberkante der Mulde sind umlaufend um diese Muldenachse gebildet.

In einem Ausführungsbeispiel weist eine Oberkante des Bedienrings einen Durchmesser zwischen 60 mm und 90 mm, insbesondere zwischen 70 mm und 80 mm, auf. Dies ist die lichte Weite in einem Querschnitt betrachtet, die zwischen diesen gegenüberliegenden Stellen beziehungsweise Punkten der Oberkante bemessen ist.

In einem Ausführungsbeispiel weist eine Unterkante des Bedienrings einen Durchmesser zwischen 45 mm und 60 mm, insbesondere zwischen 50 mm und 60 mm, auf. Auch diesbezüglich ist dies die lichte Weite in einem Querschnitt der Bedienvorrichtung betrachtet.

In einem Ausführungsbeispiel weist die Mulde entlang ihrer Muldenachse eine Tiefe auf, die zwischen 1,1 mm und 1,7 mm, insbesondere zwischen 1,3 mm und 1,5 mm, beträgt.

Vorzugsweise weist die Abdeckung eine Dicke zwischen 3 mm und 5 mm, insbesondere zwischen 3,5 mm und 4,5 mm, auf. Die Abdeckung ist insbesondere eine Glasplatte. Sie ist insbesondere aus Echtglas ausgebildet. Sie ist insbesondere vollflächig transparent.

In einem Ausführungsbeispiel ist die weitere Teilfläche der Vertiefungswand als berührsensitiver Bedienbereich ausgebildet.

In einem Ausführungsbeispiel ist in einer Querschnittbetrachtung der Mulde die Durchmesserkontur gebildet, die über die gesamte Weite U-förmig gestaltet ist. Es kann diesbezüglich eine einzige U-Form mit einem gleichen Radius realisiert sein. Möglich ist auch, dass bei dieser U-artigen Form im mittleren Bereich eine Abflachung beziehungsweise eine Abplattung ausgebildet ist. Diesbezüglich können auch dann unterschiedliche Radien realisiert sein. Möglich ist auch, dass dieser mittlere Bereich einen unendlichen Radius aufweist und diesbezüglich eine Gerade ist. Diese Durchmesserkontur, die somit einen Querschnitt durch den Mittelpunkt der Mulde darstellt, weist diesbezüglich nur eine einzige U-artige Kontur auf. Die gegenüberliegenden Enden dieser Durchmesserkontur sind die höchstgelegenen Punkte. Alle anderen Punkte der Durchmesserkontur sind in diesem Querschnitt unterhalb dieser oberen, gegenüberliegenden beiden Enden ausgebildet. Somit sind diejenigen Punkte dieser Durchmesserkontur, die radial am Weitesten von der Muldenachse entfernt sind, in axialer Richtung dieser Muldenachse betrachtet die höchstgelegenen Punkte.

Insbesondere weist die erste Teilfläche im Durchmesserquerschnitt der Mulde betrachtet kein Zwischenminimum auf. Es ist daher keine Kontur mit zwei Enden und einen dazwischenliegenden, niedriger liegenden Minimum. Ausgehend von einem oberen Ringrandpunkt ist die Kontur dieser ersten Teilfläche nach unten orientiert. Ein unterer Ringrandpunkt des unteren Ringrands stellt im Querschnitt den untersten Punkt dieser Kontur da.

Der Bedienring ist geometrisch in der Abdeckung ausgebildet und somit mit seiner Berühroberfläche einstückig damit ausgebildet. Er ist somit ortsfest in der Abdeckung gebildet. Die Außenkontur und somit der Begrenzungsrand der Vertiefung ist insbesondere eckenfrei ausgebildet. Durch die Außenkontur beziehungsweise die Oberkante ist die Grundgeometrie des Bedienrings vorgegeben und definiert.

Ein Boden der Vertiefung kann insbesondere zumindest ein optisch abbildendes Element aufweisen. Ein optisch abbildendes Element ist insbesondere ein derartiges, welches die auftreffenden Lichtstrahlen ablenkt. Dies bedeutet, dass die Lichtstrahlen nicht geradlinig durch das optisch abbildende Element hindurchtreten. Die Außenkontur ist insbesondere ein äußerer, oberer Ringrand.

Die Vertiefung ist daher so gestaltet, dass sie einerseits den Bedienring, insbesondere dessen Berühroberfläche, aufweist, andererseits nach innen an den Bedienring anschließend diesen Boden der Vertiefung aufweist. Der Boden der Vertiefung ist somit nicht in einer Ebene der Oberseitenbereiche der Abdeckung angeordnet, welche radial nach außen anschließend zum Bedienring ausgebildet sind. Die Vertiefung stellt daher eine Mulde beziehungsweise eine Art Krater dar.

Durch eine derartige Ausgestaltung ist es ermöglicht, dass eine optische Anzeige, auch vollflächig, von Informationen im Bereich der Vertiefung beziehungsweise quasi direkt an der Vertiefung verbessert erfolgen kann. Es ist somit insbesondere unmittelbar angrenzend an den Bedienring, insbesondere an das Innere des Bedienrings unmittelbar angrenzend, ein spezifisch gestalteter Boden vorgesehen. Es ist insbesondere dadurch somit ermöglicht, durch das optisch abbildende Element an dieser lokal spezifizierten Stelle der Bedienvorrichtung optisch angezeigte Informationen verbessert präsentieren zu können. Damit kann die Wahrnehmbarkeit für einen Nutzer an dieser Stelle verbessert werden. Insbesondere ist somit dann auch das Verständnis der angezeigten optischen Informationen verbessert.

In einem Ausführungsbeispiel ist die optische Anzeigeeinheit zur zusammenhängenden Anzeige eines Bilds im gesamten Flächenbereich der Vertiefung ausgebildet und somit zusammenhängend über die gesamte Vertiefungswand ausgebildet. Bei dieser Ausgestaltung ist die optische Anzeigeeinheit somit nicht nur zur einfachen Lichtdarstellung und somit zum Aktivieren von Lichtfarbinformationen ausgebildet, sondern auch zur Darstellung von Bildern mit verschiedenen Objekten als Bildinhalten und Grafiken ausgebildet. Damit können auch umfängliche optische Informationsdarstellungen erfolgen.

Darüber hinaus ist durch die Nutzung des gesamten Flächenbereichs der Vertiefung eine umfänglichere und grundsätzlich größere Darstellung von Bildern des Displays ermöglicht. Es wird somit nicht nur durch die Ringfläche des Bedienrings als solches eine optische Anzeige ermöglicht, sondern auch an dem an den Bedienring radial nach innen angrenzenden Flächenbereich dieser Vertiefung, nämlich dem Boden.

Grundsätzlich stellt der Boden denjenigen Flächenbereich der Vertiefung dar, der direkt radial nach innen an dem Bedienring angrenzt.

Insbesondere ist die optische Anzeigeeinheit ein Display, insbesondere ein Vollflächen-Display.

In einem Ausführungsbeispiel ist der Boden beziehungsweise die zweite Teilfläche der Vertiefung als berührsensitiver Bedienbereich ausgebildet. Dadurch dient er nicht nur zur spezifizierten optischen Anzeige von optischen Informationen der optischen Anzeigeeinheit, insbesondere des Displays, sondern kann darüber hinaus auch zur Einstellung von Betriebsbedingungen genutzt werden. Damit wird in einem lokal spezifizierten und geometrisch individuell gestalteten Teilbereich der Bedienvorrichtung, in welchem auch flächenüberdeckend die optische Anzeigeeinheit dahinter angeordnet ist, ein multifunktionelles optisches Anzeige- und Bedienkonzept ermöglicht.

In einem Ausführungsbeispiel ist vorgesehen, dass ein an die Vertiefung direkt angrenzender Bereich, der im Flächenbereich der optischen Anzeigeeinheit, insbesondere des Displays, ausgebildet ist, als weiterer, berührsensitiver Bedienbereich ausgebildet ist. Damit ist es in besonders vorteilhafter Weise ermöglicht, dass nicht nur eine berührsensitive Betätigung und somit Bedienung im Bereich der Vertiefung ermöglicht ist und insbesondere am Bedienring und/oder an dem Boden der Vertiefung, sondern auch darüber hinaus gehend und nach außen beziehungsweise zur Seite der Vertiefung hin angrenzend eine derartige berührsensitive Bedienung ermöglicht ist. Damit kann das Konzept der berührsensitiven Bedienung noch flexibler und variabler erfolgen. Insbesondere ist es in dem Zusammenhang dann auch ermöglicht, dass eine zusammenhängende und somit unterbrechungsfreie berührsensitive Bedienung auch über den Übergang zwischen der Vertiefung und dem direkt daran angrenzenden, weiteren berührsensitiven Bedienbereich hinweg erfolgen kann. Beispielsweise kann ein derartiges Bedienkonzept dahingehend erfolgen, dass ein berührsensitives Entlangstreifen an dem berührsensitiven Bedienring erfolgt und dann radial nach außen an diesem weiteren berührsensitiven Bedienbereich dieses berührsensitive Bedienen fortgesetzt wird. Insbesondere kann dies unterbrechungsfrei erfolgen. Möglich ist jedoch auch genau die umgekehrte Vorgehensweise. So kann beispielsweise das berührsensitive Bedienen an diesem weiteren berührsensitiven Bedienbereich erfolgen und dann, insbesondere unterbrechungsfrei, das berührsensitive Bedienen am berührsensitiven Bedienring und/oder am Boden der Vertiefung fortgesetzt werden. Insbesondere dann, wenn der Boden auch als berührsensitiver Bedienbereich ausgebildet ist. Ebenso kann ein berührsensitives Bedienen am Boden der Vertiefung erfolgen, insbesondere wenn dieser Boden ein berührsensitiver Bedienbereich ist, und von dort über den Bedienring hinweg bis zu dem weiteren berührsensitiven Bedienbereich ein Bedienen erfolgt. Diesbezügliche Bedienkonzepte können sowohl lineare und somit geradlinige berührsensitive Betätigungen sein. Ebenso sind jedoch auch nicht-geradlinige Berührbedienungen ermöglicht. Auch Kombinationen von geradlinigen und nichtgeradlinigen Berührbedienungen sind in dem Zusammenhang ermöglicht.

In einem Ausführungsbeispiel hängen der berührsensitive Bedienbereich der Vertiefung und der weitere berührsensitive Bedienbereich, der direkt radial nach außen hin zu dieser Vertiefung anschließt, so zusammen, dass eine unterbrechungsfreie Berührbedienbewegung über beide berührsensitiven Bedienbereiche hinweg durchführbar ist.

In einem Ausführungsbeispiel ist vorgesehen, dass der berührsensitive Bedienbereich der Vertiefung und der weitere berührsensitive Bedienbereich außerhalb der Vertiefung zur zusammenhängenden beziehungsweise unterbrechungsfreien Darstellung von optischen Informationen, insbesondere Bildern, ausgebildet sind. Damit ist auch eine optische Informationspräsentation mit einem zusammenhängenden Gesamtbild ermöglicht, welches sich flächenmäßig jedoch über die Ausmaße der Vertiefung hinaus erstreckt. Auch dieses Bild kann dann durch die Abdeckung hindurch wahrgenommen werden.

Insbesondere ist die Abdeckung im, insbesondere gesamten, Bereich des Displays transparent ausgebildet.

In einem Ausführungsbeispiel ist vorgesehen, dass die die Vertiefung begrenzende Bedienoberfläche konusförmig angeordnet ist. Diese Ringwand stellt auch die Ringfläche des Bedienrings dar. Durch diese konusförmige Anordnung kann einerseits der Bedienring in seiner geometrischen Form eindeutig definiert werden. Darüber hinaus ist durch die Konusform das Auflegen eines Fingers auf diese Ringwand sehr einfach ermöglicht und ein einfaches Entlangstreifen im aufgelegten Zustand ermöglicht. Darüber hinaus ist durch die Konusform auch ein definierter Übergang zu dem nach unten beziehungsweise nach hinten versetzten Boden beziehungsweise der zweiten Teilfläche der Vertiefung gebildet. Die konusförmige Anordnung beziehungsweise die gegenüber der Ebene der Abdeckung beziehungsweise der Oberseite geneigte beziehungsweise schräg gestellte Orientierung ermöglicht die oben genannten Vorteile im Hinblick auf ein einfaches Bedienen und Entlangstreifen und der verbesserten geometrischen Abgrenzung zum Boden der Vertiefung.

In einem Ausführungsbeispiel ist die optische Anzeigeeinheit abhängig von einer berührenden Bedienung zumindest eines berührsensitiven Bedienbereichs zur dynamischen Laufbildanzeige im Bereich der Vertiefung ausgebildet. Möglich ist somit eine Darstellung ähnlich einem "Bilderkarussell". In einem weiteren Ausführungsbeispiel weist die Bedienvorrichtung einen nochmals weiteren berührsensitiven Bedienbereich auf. Dieser ist direkt angrenzend an das Display ausgebildet. Dies bedeutet somit, dass bei diesem nochmals weiteren berührsensitiven Bedienbereich keine optische Anzeige mit dem Display vorgesehen ist und auch nicht möglich ist. Es ist dort dann lediglich eine berührsensitive Wechselwirkung ausgebildet.

In einem Ausführungsbeispiel ist die Bedienvorrichtung derart gestaltet, dass abhängig von der Bedienart des berührsensitiven Bedienens eine daran angepasste optische Anzeige auf der optischen Anzeigeeinheit, insbesondere im Display, zumindest im Bereich der Vertiefung dargestellt ist. Dies bedeutet beispielsweise, dass dann, wenn der Bedienring berührsensitiv bedient wird, im Flächenbereich des Bedienrings durch das Display eine individuelle optische Anzeige von Informationen erfolgen kann. Dies kann eine reine Lichtaktivierung sein und somit nur eine spezifische Lichtfarbe dargestellt werden. Möglich ist jedoch auch, dass zusätzlich oder anstatt dazu auch Inhaltsinformationen, wie beispielsweise Zahlen oder Buchstaben oder Symbole dargestellt werden. Auch eine Darstellung einer Grafik oder eines echten Bilds mit einem oder mehreren Bildobjekten in dem Bild ist dann möglich. Bildobjekte sind in dem Zusammenhang optische Darstellungen von tatsächlichen Gegenständen, die es in der Realität gibt. Beispielsweise können dies spezifische Bilder von Lebensmitteln oder dergleichen sein.

Möglich ist es auch, dass zusätzlich oder anstatt dazu abhängig von der Bedienart des berührsensitiven Bedienens des spezifischen Bereichs, beispielsweise des berührsensitiven Bedienrings oder des dann vorteilhafterweise berührsensitiv ausgebildeten Bodens der Vertiefung und/oder des an die Vertiefung angrenzenden, vorzugsweise vorhandenen, weiteren berührsensitiven Bedienbereichs, an dann anderen Stellen die optische Anzeige der optischen Anzeigeeinheit erfolgt. Beispielsweise kann in dem Zusammenhang dann, wenn der berührsensitive Bedienring berührt wird, im Bereich des Bodens der Vertiefung und/oder seitlich an die Vertiefung angrenzend eine optische Anzeige durch die optische Anzeigeeinheit erzeugt werden. Möglich ist es auch, dass bei einer berührsensitiven Bedienung des Bodens der Vertiefung an diesbezüglich anderer Stelle, beispielsweise im Flächenbereich des berührsensitiven Bedienrings und/oder seitlich an die Vertiefung angrenzend, eine optische Anzeige erfolgt.

Ebenso ist es zusätzlich oder anstatt dazu möglich, dass dies mit dem nochmals weiteren berührsensitiven Bedienbereich erfolgt, der seitlich an das Display angrenzend ausgebildet ist. Auch Kombinationen dieser verschiedenen berührsensitiven Betätigungen und daraus resultierender optischen Anzeigen ist möglich.

Wie bereits oben dargelegt, kann in einem Ausführungsbeispiel diesbezüglich eine lokale berührsensitive Bedienung erfolgen, beispielsweise ein Entlangstreifen an dem Flächenbereich des berührsensitiven Bedienrings. Möglich ist auch eine nur berührsensitive Bedienung im Bereich des Bodens beziehungsweise der zweiten Teilfläche der Vertiefung. Möglich ist jedoch auch, eine zusammenhängende berührsensitive Bedienung über derartig geometrisch unterschiedene Komponenten hinweg durchzuführen. Dies wurde bereits oben in einigen Beispielen erläutert.

Auch dadurch können abhängig von der Art, wie viel derartige unterschiedliche Teilbereiche (berührsensitiver Bedienring, berührsensitiver Boden, weitere berührsensitive Bedienbereiche) in einem zusammenhängenden berührsensitiven Bedienvorgang betätigt werden, individuelle optische Anzeigen erfolgen.

Durch die oben genannten Ausgestaltungen der Bedienvorrichtung ist eine vollständige Nutzung der gesamten Fläche der optischen Anzeigeeinheit, insbesondere des Displays, ermöglicht. Insbesondere ist auch in dem Bereich, in dem das Display frontseitig durch die Vertiefung in der Abdeckung abgedeckt ist, dennoch eine vollständige optische Anzeige, die unterbrechungsfrei ist, insbesondere auch Bilder entsprechend darstellen kann, insbesondere auch dynamisch wechselnd darstellen kann, ermöglicht. Insbesondere ist die Abdeckung in diesem Bereich vollständig transparent.

Es wird also auch eine Bedienvorrichtung bereitgestellt, welche eine vollflächige optische Anzeigeeinheit aufweist, die sich über die gesamte Anzeigefläche auch vorzugsweise über die Fläche der Vertiefung hinaus erstreckt. Insbesondere ist die Vertiefung bei einer Projektionsbetrachtung auf die Bedienvorrichtung vollständig innerhalb des Flächenbereichs der optischen Anzeigeeinheit angeordnet.

Bei der Ausgestaltung stellt insbesondere auch diese Vertiefung als Ganzes betrachtet und somit mit ihrem gesamten Flächenbereich einen Teilbereich des Displays dar. Insbesondere ist in dem Zusammenhang eine unterbrechungsfreie optische Anzeige im Bereich der gesamten Fläche der Vertiefung ermöglicht. Insbesondere ist in dem Zusammenhang auch die Fläche des berührsensitiven Bedienrings vollständig transparent ausgebildet beziehungsweise die Abdeckung im Flächenbereich des berührsensitiven Bedienrings und im Flächenbereich des Bodens der Vertiefung vollständig transparent ausgebildet.

Ein weiterer Aspekt der Offenbarung betrifft ein Haushaltsgerät mit einer Bedienvorrichtung gemäß dem oben genannten Aspekt oder einer vorteilhaften Ausgestaltung davon. Insbesondere ist das Haushaltsgerät zum Zubereiten von Lebensmitteln ausgebildet. Es kann in dem Zusammenhang ein Gargerät mit einem Garraum sein, in dem Lebensmittel zubereitet werden können. Das Gargerät kann ein Backofen oder ein Dampfgargerät oder ein Mikrowellengargerät sein. Ebenso ist es möglich, dass das Haushaltsgerät jedoch auch ein Kochfeld ist.

Die Abdeckung kann aus Echtglas oder Kunstglas sein.

Mit Angaben "oben", "unten", "vorne", "hinten, "horizontal", "vertikal", "Tiefenrichtung", "Breitenrichtung", "Höhenrichtung" etc. sind die bei bestimmungsgemäßen Gebrauch und bestimmungsgemäßem Anordnen des Geräts gegebenen Positionen und Orientierungen angegeben.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert. Es zeigen:
- Fig. 1: eine schematische Darstellung eines Ausführungsbeispiels eines erfindungsgemäßen Haushaltsgeräts mit einem Ausführungsbeispiel einer erfindungsgemäßen Bedienvorrichtung;
- Fig. 2: eine schematische perspektivische Darstellung eines Ausführungsbeispiels der Bedienvorrichtung;
- Fig. 3: eine Schnittdarstellung durch ein Ausführungsbeispiel der Bedienvorrichtung gemäß Fig. 2;
- Fig. 4: eine Schnittdarstellung durch ein weiteres Ausführungsbeispiel der Bedienvorrichtung gemäß Fig. 2;
- Fig. 5: eine Schnittdarstellung durch ein weiteres Ausführungsbeispiel der Bedienvorrichtung gemäß Fig. 2;
- Fig. 6: eine Schnittdarstellung durch ein weiteres Ausführungsbeispiel der Bedienvorrichtung gemäß Fig. 2; und
- Fig. 7: eine schematische Darstellung von Teilbereichen der Bedienvorrichtung.

In den Figuren werden gleiche oder funktionsgleiche Elemente mit den gleichen Bezugszeichen versehen.

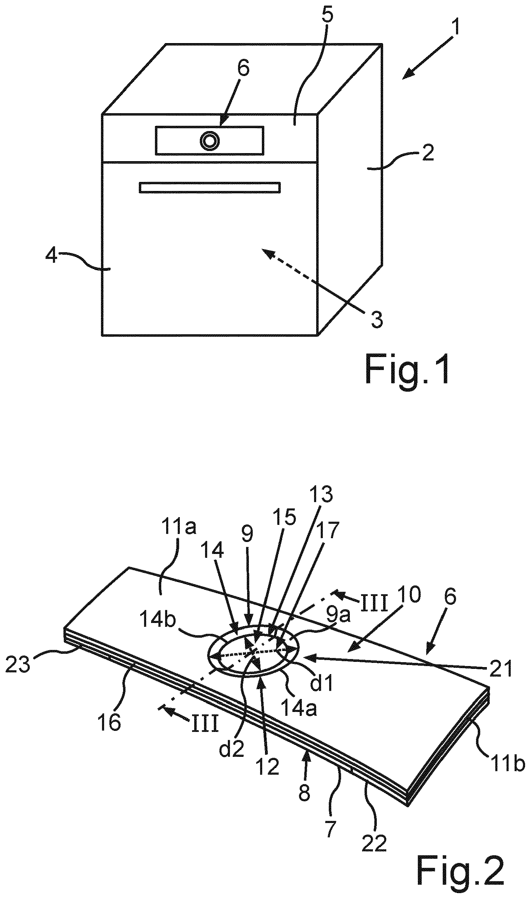

In Fig. 1 ist in einer schematischen Darstellung ein Haushaltsgerät 1 gezeigt. Das Haushaltsgerät 1 ist hier zum Zubereiten von Lebensmitteln ausgebildet. Es kann ein Gargerät sein. Beispielsweise kann es ein Kochfeld sein. Es kann jedoch auch ein Backofen oder ein Dampfgargerät oder ein Mikrowellengargerät sein. Das Haushaltsgerät 1 weist ein Gehäuse 2 auf. In diesem ist ein Aufnahmeraum 3 ausgebildet. Dieser ist insbesondere ein Garraum. Der Aufnahmeraum 3 ist frontseitig durch eine Tür 4 verschließbar. Darüber hinaus weist das Haushaltsgerät 1 eine Bedienblende 5 auf. In einem Ausführungsbeispiel weist das Haushaltsgerät 1 eine Bedienvorrichtung 6 auf. Diese kann insbesondere an der Bedienblende 5 angeordnet sein. Die Bedienvorrichtung 6 weist, wie dies in Fig. 2 in einer schematischen und perspektivischen Darstellung gezeigt ist, eine optische Anzeigeeinheit 7 auf. Diese ist insbesondere als Display 8 ausgebildet. In dem Zusammenhang kann daher dann auch die Anzeige von Bildern und Grafiken erfolgen. In Bildern sind ein oder mehrere Bildobjekte anzeigbar, die somit gegenständliche körperliche Objekte sind. Beispielsweise können in dem Zusammenhang Bilder von Lebensmitteln dargestellt werden.

Die Bedienvorrichtung 6 weist einen berührsensitiven Bedienring 9 auf. Dieser ist bei einer frontseitigen Projektionsbetrachtung, insbesondere vollständig, im Flächenbereich der optischen Anzeigeeinheit 7 ausgebildet.

Darüber hinaus weist die Bedienvorrichtung 6 eine Abdeckung 10 auf. Die Abdeckung 10 ist eine Abdeckplatte. Sie deckt die optische Anzeigeeinheit 7 frontseitig ab. Die Abdeckung 10 ist insbesondere einstückig ausgebildet. Sie ist insbesondere transparent, vorzugsweise vollständig transparent ausgebildet. Insbesondere ist die Abdeckung 10 eine Glasplatte. Die Abdeckung 10 ist eine zur optischen Anzeigeeinheit 7 separate Komponente. Die plattenförmige Abdeckung 10 weist eine Frontseite beziehungsweise Vorderseite beziehungsweise Oberseite 11a auf. Die Abdeckung 10 weist eine Rückseite beziehungsweise eine Unterseite 11b auf.

Die Oberseite 11a ist der optischen Anzeigeeinheit 7 abgewandt. Die Oberseite 11a ist eine frontseitige Sichtseite und somit eine berührbare Seite.

Wie darüber hinaus in Fig. 1 zu erkennen ist, weist die Abdeckung 10 eine Vertiefung 12 auf. Die Vertiefung 12 ist in dem Zusammenhang als Mulde ausgebildet. Die Vertiefung 12 ist durch eine Vertiefungswand 13 begrenzt. Die Vertiefung 12 ist als Ganzes betrachtet als zusammenhängende Mulde ausgebildet. Diese Mulde ist kraterartig. Sie kann auch als kesselartig oder trichterartig oder schalenförmig bezeichnet werden. Die Vertiefungswand 13 weist die Form eines Teilbereichs einer Kugeloberfläche oder einer teilweise abgeflachten oder teilweise abgeplatteten Kugeloberfläche auf.

Die Vertiefung 12 ist so ausgebildet, dass die gesamte Vertiefungswand 13 unter dem Niveau eines an die Vertiefung 12 direkt angrenzenden Flächenbereichs der Oberseite 11a liegt.

Die Vertiefungswand 13 weist zumindest eine obere, ringförmige Teilfläche 14 auf. Dies ringförmige Teilfläche 14 ist eine Berühroberfläche 9a des Bedienrings 9.

Der Bedienring 9 ist eine feststehende, mit der Abdeckung 10 einstückig ausgebildete Komponente. Die Berühroberfläche 9a ist somit feststehend. Bei Auflegen eines Fingers und beim Entlanggleiten des Fingers auf der Berühroberfläche 9a bewegt sich diese Berühroberfläche 9a daher nicht.

Die Vertiefungswand 13 weist eine weitere Teilfläche 15 auf, die an die Berühroberfläche 9a nach unten hin direkt anschließt.

Die obere Teilfläche 14 weist einen oberen Ringrand 14a auf. Dieser bildet in einem Ausführungsbeispiel auch die Oberkante der Vertiefung 12. Die obere Teilfläche 14 weist des Weiteren einen unteren Ringrand 14b auf. Dieser untere Ringrand 14b stellt auch die Grenze zur unteren, zweiten Teilfläche 15 dar.

Des Weiteren weist die Bedienvorrichtung 6 eine Berührsensorik 16 auf. Diese ist zwischen der Abdeckung 10 und der optischen Anzeigeeinheit 7 angeordnet. Die Berührsensorik 16 ist eine Sensoreinheit zur Sensierung von Berührungen der Berühroberfläche 9a. Die Berührsensorik 16 ist an der Rückseite beziehungsweise der Unterseite 11b angeordnet. Sie kann vollflächig an der Unterseite 11b angeordnet sein oder nur partiell dort angeordnet sein. Es kann also beispielsweise nur der Bedienring 9 mit seiner Berühroberfläche 9a berührsensitiv ausgebildet sein und die zweite Teilfläche 15 nicht berührsensitiv ausgebildet sein. Es kann aber in einem vorteilhaften Ausführungsbeispiel auch die zweite Teilfläche 15 berührsensitiv ausgebildet sein. Dadurch weist die zweite Teilfläche 15 auch einen Bedienbereich 17 auf. Insbesondere ist sie vollflächig als berührsensitiver Bedienbereich 17 ausgebildet.

Insbesondere kann die Berühroberfläche 9a und/oder die zweite Teilfläche 15 auch als Anzeigefläche für optische Ausgaben der optischen Anzeigeeinheit 7 vorgesehen sein. Insbesondere können diese Flächen jeweils vollflächig als Anzeigeflächen ausgebildet sein. Sie können als zusammenhängende Anzeigefläche kombiniert sein.

Diese Vertiefung 12 weist eine in der Außenkontur eckenfreie Ausgestaltung auf. Diese bedeutet, dass der obere Ringrand 14a eckenfrei ausgebildet ist. Er kann kreisrund ausgebildet sein. Er kann aber auch oval ausgebildet sein. Insbesondere ist auch der untere Ringrand 14b eckenfrei ausgebildet. Es kann vorgesehen sein, dass ein Übergang zwischen der Berühroberfläche 9a und der zweiten Teilfläche 15 stufenlos ausgebildet ist. Es kann aber auch ein gestufter Übergang ausgebildet sein.

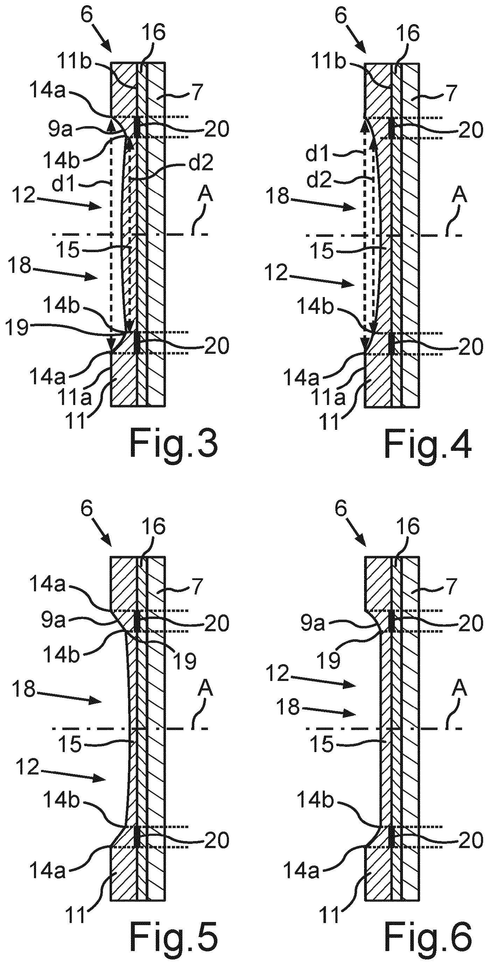

In Fig. 3 ist eine Schnittdarstellung eines Ausführungsbeispiels der Anordnung in Fig. 2 entlang der Schnittlinie III-III gezeigt.

Die Querschnittdarstellung in Fig. 3 zeigt die Vertiefung 12 als die bereits erläuterte Mulde 18. In dieser Querschnittdarstellung, die die Durchmesserkontur der Mulde 18 zeigt, ist eine lichte Weite an dem oberen Ringrand 14a dargestellt. Diesbezüglich ist der Durchmesser d1 gezeigt. Entlang dieses Durchmessers d1 betrachtet ist nur ein Luftraum zwischen den gegenüberliegenden Ringrandpunkten des oberen Ringrands 14a ausgebildet. Kein weiterer Punkt der ansonsten in diesem Querschnitt gezeichneten Durchmesserkontur und somit der Vertiefungswand 13 weist in axialer Richtung zur Muldenachse A eine Lage beziehungsweise ein Niveau auf, welches auf gleicher Höhe ist wie diese gegenüberliegenden Stellen beziehungsweise Punkte des oberen Ringrands 14a. Es sind somit alle Punkte der Kontur der Vertiefungswand 13 in diesem Querschnitt unterhalb des Niveaus dieser beiden Ringrandpunkte des oberen Ringrands 14a ausgebildet. Dieser obere Ringrand 14a stellt auch im Ausführungsbeispiel die Oberkante des Bedienrings 9 dar. Diesbezüglich ist im Ausführungsbeispiel auch damit die Oberkante der Mulde 18 einhergehend. Durch diesen oberen Ringrand 14a wird im Ausführungsbeispiel somit das obere Ende der Mulde 18 gebildet und somit auch diesbezüglich der Eingang der Mulde 18 begrenzt. Der Eingang der Mulde 18 ist diesbezüglich eine Kreisfläche oder eine ovale Fläche, die eine zusammenhängende Fläche ist. Diesbezüglich ist die Geometrie des Luftraums am Eingang dieser Mulde 18 bezeichnet.

Darüber hinaus ist in Fig. 3 auch zu erkennen, dass zwischen der Berühroberfläche 9a und der nach unten hin folgenden zweiten Teilfläche 15 der Vertiefungswand 13 ein gestufter Übergang 19 ausgebildet ist. Im gezeigten Ausführungsbeispiel ist die zweite Teilfläche 15 hier konvex gewölbt.

Wie in Fig. 3 auch zu erkennen ist, ist in dieser Querschnittdarstellung die Durchmesserkontur mit einem zweiten Durchmesser d2 realisiert, die am unteren Ringrand 14b des Bedienrings 9 gebildet ist. Dieser Durchmesser d2 ist kleiner als der Durchmesser d1.

In einem Ausführungsbeispiel ist die Berühroberfläche 9a konkav gewölbt.

In Fig. 4 ist ein weiteres Ausführungsbeispiel einer Bedienvorrichtung 6 gezeigt. Die Schnittdarstellung ist hier entsprechend wie in Fig. 3. Es ist somit hier auch eine Durchmesserkontur der Vertiefungswand 13 gezeigt.

Wie in Fig. 3 ist auch in Fig. 4 und insbesondere auch in den dann nachfolgend noch weiteren erläuterten Ausführungsbeispiel an der Unterseite 11b der Abdeckung 11 eine

Bedruckung 20 ausgebildet. Diese Bedruckung 20 ist im Ausführungsbeispiel als Ring gebildet. Wie auch in Fig. 3 zu erkennen ist, erstreckt sich die Bedruckung 20 umlaufend um die Muldenachse A. Die Bedruckung 20 ist in radialer Richtung und somit senkrecht zur Muldenachse A an den Stellen ausgebildet, die sich zwischen der radialen Position des oberen Ringrands 14a und der radialen Position des unteren Ringrands 14b erstrecken. Darüber hinausgehend ist die Bedruckung 20 nicht ausgebildet. Bei dem Ausführungsbeispiel in Fig. 4 ist die zweite Teilfläche 15 nicht konvex gekrümmt. Vielmehr ist sie hier konkav gekrümmt. Sie kann in einem Ausführungsbeispiel den gleichen Radius aufweisen, wie die erste Teilfläche 14 beziehungsweise die Berühroberfläche 9a. In dem Zusammenhang kann die gesamte Mulde 18 durch eine Kugelkopffräse erzeugt werden.

In einem weiteren Ausführungsbeispiel gemäß Fig. 5 ist es möglich, dass der Radius der konkav gewölbten zweiten Teilfläche 15 kleiner ist als der Radius der ersten Teilfläche 14 und somit der Berühroberfläche 9a. Im Unterschied zu einem einheitlichen Radius, bei welchem dann ein Übergang zwischen der Berühroberfläche 9a und der zweiten Teilfläche 15 stufenlos gebildet ist, ist bei diesen unterschiedlichen Radien wiederum ein gestufter Übergang 19 realisiert.

In Fig. 6 ist ein weiteres Ausführungsbeispiel einer Bedienvorrichtung 6 in einer Schnittdarstellung, wie sie auch in Fig. 3 und Fig. 4 gezeigt ist, dargestellt. Auch hier ist somit eine Durchmesserkontur der Vertiefungswand 13 gezeigt. Bei diesem Ausführungsbeispiel ist die zweite Teilfläche 15 nicht gewölbt. Vielmehr ist sie hier eben ausgebildet.

Die Durchmesser d1 und d2 sind in Fig. 5 und Fig. 6 nicht mehr eingezeichnet, gelten hier jedoch entsprechend, wie sie zu Fig. 3 und Fig. 4 erläutert wurden.

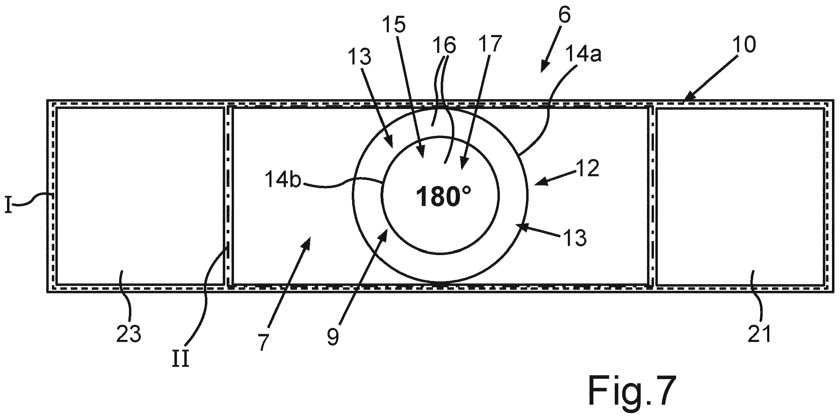

In einem weiteren Ausführungsbeispiel ist ein an die Vertiefung 12 direkt angrenzender Bereich, der auch im Flächenbereich des Displays 8 bei einer Projektionsbetrachtung auf die Bedienvorrichtung 6 enthalten ist, als weiterer berührsensitiver Bedienbereich 21 (Fig. 2, 7) ausgebildet.

Insbesondere hängen der berührsensitive Bedienbereich in Form des berührsensitiven Bedienrings 9 und/oder der berührungssensitive Bedienbereich der zweiten Teilfläche 15 einerseits und der weitere berührsensitive Bedienbereich 21 direkt so zusammen, dass eine unterbrechungsfreie Berührbedienbewegung über beide berührsensitiven Bedienbereiche hinweg durchführbar ist. Insbesondere ist somit eine individuelle Betriebsbedingungseinstellung durch diese Berührbedienbewegung ermöglicht.

Es ist auch möglich, dass der berührsensitive Bedienbereich in Form des berührsensitiven Bedienrings 9 und/oder der berührsensitiv ausgebildeten zweiten Teilfläche 15 einerseits und der weitere berührsensitive Bedienbereich 21 zur zusammenhängenden Darstellung von optischen Informationen, insbesondere Bildern, die durch die optische Anzeigeeinheit 7, insbesondere das Display 8, erzeugt werden, ausgebildet sind. Es sind somit diese Bilder auch flächenmäßig über die Fläche der Vertiefung 12 hinweg zusammenhängend darstellbar und bei Betrachtung der Abdeckung 10 durch diese hindurch entsprechend wahrnehmbar.

Es ist vorzugsweise vorgesehen, dass die optische Anzeigeeinheit 7 abhängig von einer berührenden Bedienung zumindest eines berührsensitiven Bedienbereichs, insbesondere der berührsensitiv ausgebildeten zweiten Teilfläche 15, zur dynamischen Laufbildanzeige im Bereich der Vertiefung 12 ausgebildet ist. Beispielsweise kann in dem Zusammenhang durch eine lineare Berührbedienbewegung an der zweiten Teilfläche 15 eine derartige dynamische Laufbildanzeige erreicht werden. Eine lineare Berührbedienbewegung kann beispielsweise ausschließlich an der zweiten Teilfläche 15 erfolgen. Sie kann jedoch auch kombiniert an der zweiten Teilfläche 15 und hinführend zum Bedienring 9 erfolgen. Ebenso ist es möglich, dass eine derartige lineare Berührbedienbewegung von der zweiten Teilfläche 15 über den Bedienring 9 bis zu dem weiteren berührsensitiven Bedienbereich 21 erfolgt. Derartige lineare Berührbedienbewegungen können horizontal, vertikal oder auch schräg erfolgen.

Wie in Fig. 2 und Fig. 7 auch zu erkennen ist, ist angrenzend an die optische Anzeigeeinheit 7 ein nochmals weiterer berührsensitiver Bedienbereich 22 und/oder 23 der Bedienvorrichtung 6 in einem weiteren Ausführungsbeispiel möglich. Diese nochmals weiteren berührsensitiven Bedienbereiche 22 und/oder 23 sind vorzugsweise frontseitig durch die Abdeckung 10 abgedeckt. Eine optische Anzeige im Flächenbereich der Abdeckung 10, mit welchem diese berührsensitiven Bedienbereiche 23 und/oder 23 abgedeckt sind, ist daher nicht ermöglicht. Dies, da die optische Anzeigeeinheit 7 nicht bis dorthin reicht beziehungsweise nicht bis dorthin ausgebildet ist.

Bei diesem Ausführungsbeispiel ist es dann auch ermöglicht, dass eine Berührbedienung zumindest anteilig auch auf der Oberseite 11a im Flächenbereich erfolgt, in dem die nochmals weiteren berührsensitiven Bedienbereiche 23 und/oder 23 ausgebildet sind.

Möglich ist es, dass individuelle Flächenbereiche, wie die einzelnen berührsensitiven Bedienbereiche, wie der Bedienring 9, bei einem vorteilhaften Ausführungsbeispiel auch die zweite Teilfläche 15 und/oder die Bedienbereiche 21 und/oder 22 und/oder 23, gegebenenfalls individuell optisch gekennzeichnet sind. Beispielsweise können hier Linienabgrenzungen der jeweiligen Flächengeometrie beziehungsweise der geometrischen Ausdehnung durch die optische Anzeigeeinheit 7 angezeigt sein. Dies kann dauerhaft oder dynamisch veränderlich sein. Beispielsweise kann dies auch abhängig von der Bedienart sein. Möglich ist beispielsweise auch, dass hier Näherungssensoren der Bedienvorrichtung 6 vorhanden sind, die ein Annähern an spezifische Flächenbereiche und somit Bedienbereiche erkennen. Abhängig davon kann dann diese geometrische optische Kenntlichmachung erfolgen.

Darüber hinaus ist es auch möglich, dass bei einem Bedienvorgang und somit bei einem Berühren eines derartigen spezifischen Bedienbereichs das Entlangstreifen und somit der berührte Bedienweg optisch kenntlich gemacht wird. Beispielsweise kann dies durch eine bloße Farbdarstellung erfolgen. Zusätzlich oder anstatt dazu können jedoch auch Inhaltsinformationen, wie Buchstaben und/oder Zahlen und/oder Symbole dargestellt werden.

In Fig. 7 ist in einer schematischen Darstellung eine Frontansicht auf die Bedienvorrichtung 6 gezeigt. Durch die Linie I ist die Gesamtfläche der Abdeckung 10 dargestellt. Durch die weiter gestrichelte Linie II ist derjenige Flächenbereich dargestellt, der die optische Anzeigeeinheit 7 darstellt. Wie zu erkennen ist, ist bei dieser Projektionsbetrachtung die Fläche der optischen Anzeigeeinheit 7 vollständig innerhalb des Flächenbereichs der Abdeckung 10. Darüber hinaus ist auch zu erkennen, dass der Flächenbereich des Bedienrings 9 und der Flächenbereich der zweiten Teilfläche 15 vollständig innerhalb des Flächenbereichs der optischen Anzeigeeinheit 7 angeordnet sind. Durch die transparente Ausgestaltung der Berühroberfläche 9a im Bereich der Abdeckung 10 und der transparenten Ausgestaltung der Fläche der zweiten Teilfläche 15 können Bilder durch die optische Anzeigeeinheit 7 auch im gesamten Flächenbereich dieser Vertiefung 12 angezeigt und durch die Abdeckung 10 hindurch wahrgenommen werden.

### Bezugszeichenliste

- 1: Haushaltsgerät
- 2: Gehäuse
- 3: Aufnahmeraum
- 4: Tür
- 5: Bedienblende
- 6: Bedienvorrichtung
- 7: Anzeigeeinheit
- 8: Display
- 9: Bedienring
- 9a: Berühroberfläche
- 10: Abdeckung
- 11a: Oberseite
- 11b: Unterseite
- 12: Vertiefung
- 13: Vertiefungswand
- 14: erste Teilfläche
- 14a: oberer Ringrand
- 14b: unterer Ringrand
- 15: zweite Teilfläche
- 16: Berührsensorik
- 17: Bedienbereich
- 18: Mulde
- 19: gestufter Übergang
- 20: Bedruckung
- 21: Bedienbereich
- 22: Bedienbereich
- 23: Bedienbereich
- d1: Durchmesser
- d2: Durchmesser

## Patentansprüche

1. Bedienvorrichtung (6) für ein Haushaltsgerät (1), mit einer optischen Anzeigeeinheit (7), und einem berührsensitiven Bedienring (9) als berührsensitiven Bedienbereich, der im Flächenbereich der optischen Anzeigeeinheit (7) ausgebildet ist, wobei die optische Anzeigeeinheit (7) mit einer dazu separaten, transparenten Abdeckung (10) der Bedienvorrichtung (6) abgedeckt ist, wobei an einer Oberseite (11a) der Abdeckung (10) eine Vertiefung (12) ausgebildet ist, die durch eine Vertiefungswand (13) begrenzt ist, wobei die Vertiefung (12) als Ganzes betrachtet als zusammenhängende, kraterartige Mulde (18) ausgebildet ist, so dass die gesamte Vertiefungswand (13) unter dem Niveau eines an die Mulde (18) angrenzenden Flächenbereichs der Oberseite (11a) ausgebildet ist, wobei zumindest eine obere, ringförmige Teilfläche (14) der Vertiefungswand (13) eine Berühroberfläche (9a) des Bedienrings (9) bildet, und die Vertiefungswand (13) eine weitere Teilfläche (15) aufweist, die an die Berühroberfläche (9a) nach unten hin anschließt, **dadurch gekennzeichnet, dass** an einer Unterseite (11b) der Abdeckung (10) eine Bedruckung (20) ausgebildet ist, durch welche die Fläche des Bedienrings (9) an der Oberseite (11a) optisch gekennzeichnet ist, wobei die Bedruckung (20) als Ring an der Unterseite (11b) und mit einer radialen Ringdicke ausgebildet ist, die dem radialen Maßunterschied zwischen einem oberen Ringrand (14a) des Bedienrings (9) und einem unteren Ringrand (14b) des Bedienrings (9) entspricht.

2. Bedienvorrichtung (6) nach Anspruch 1, **dadurch gekennzeichnet, dass** die weitere Teilfläche (15) eben ist.

3. Bedienvorrichtung (6) nach Anspruch 1, **dadurch gekennzeichnet, dass** die weitere Teilfläche (15) uneben ist.

4. Bedienvorrichtung (6) nach Anspruch 3, **dadurch gekennzeichnet, dass** die weitere Teilfläche (15) konkav gewölbt ist.

5. Bedienvorrichtung (6) nach einem der vorhergehenden Ansprüche, **dadurch gekennzeichnet, dass** die ringförmige Berühroberfläche (9a) gewölbt ist.

6. Bedienvorrichtung (6) nach Anspruch 5, **dadurch gekennzeichnet, dass** die Wölbung der ringförmigen Berühroberfläche (9a) konkav ist.

7. Bedienvorrichtung (6) nach Anspruch 4 und nach Anspruch 6, **dadurch gekennzeichnet, dass** der Radius der Wölbung der ringförmigen Berühroberfläche (9a) gleich dem Radius der weiteren Teilfläche (15) ist.

8. Bedienvorrichtung (6) nach Anspruch 4 und nach Anspruch 6, **dadurch gekennzeichnet, dass** der Radius der Wölbung der ringförmigen Berühroberfläche (9a) unterschiedlich, insbesondere größer, zum Radius der weiteren Teilfläche (15) ist.

9. Bedienvorrichtung (6) nach einem der vorhergehenden Ansprüche, **dadurch gekennzeichnet, dass** die Bedruckung (20) nur als der Ring an der Unterseite (11b) ausgebildet ist.

10. Bedienvorrichtung (6) nach einem der vorhergehenden Ansprüche, **dadurch gekennzeichnet, dass** zwischen der Abdeckung (10) und der dazu separaten optischen Anzeigeeinheit (7) eine Berührsensorik (16) angeordnet ist.

11. Bedienvorrichtung (6) nach einem der vorhergehenden Ansprüche, **dadurch gekennzeichnet, dass** ein oberer Ringrand (14a) des Bedienrings (9) durch die Oberkante der Mulde (18) gebildet ist.

12. Bedienvorrichtung (6) nach einem der vorhergehenden Ansprüche, **dadurch gekennzeichnet, dass** ein oberer Ringrand (14a) des Bedienrings (9) einen Durchmesser (d1) zwischen 60mm und 90mm, insbesondere zwischen 70mm und 80mm, aufweist.

13. Bedienvorrichtung (6) nach einem der vorhergehenden Ansprüche, **dadurch gekennzeichnet, dass** ein unterer Ringrand (14b) des Bedienrings (9) einen Durchmesser (d2) zwischen 45mm und 60mm, insbesondere zwischen 50mm und 60mm, aufweist.

14. Bedienvorrichtung (6) nach einem der vorhergehenden Ansprüche, **dadurch gekennzeichnet, dass** die weitere Teilfläche (15) der Vertiefungswand (13) als berührsensitiver Bedienbereich (17) ausgebildet ist.

## Claims

1. Operating device (6) for a household appliance (1) comprising a visual display unit (7) and a touch-sensitive operating ring (9) acting as a touch-sensitive operating region which is configured in the surface area of the visual display unit (7), wherein the visual display unit (7) is covered by a separate transparent cover (10) of the operating device (6), wherein a recess (12) is configured on an upper side (11a) of the cover (10) and is defined by a recess wall (13), wherein the recess (12) is configured as a continuous crater-like depression (18), when viewed as a whole, such that the entire recess wall (13) is configured below the level of a surface area of the upper side (11a) adjacent to the depression (18), wherein at least one upper annular partial surface (14) of the recess wall (13) forms a touch surface (9a) of the operating ring (9) and the recess wall (13) has a further partial surface (15) which adjoins the touch surface (9a) at the bottom thereof, **characterised in that** a printing (20) is configured on a lower side (11b) of the cover (10), the surface area of the operating ring (9) on the upper side (11a) being visually identified thereby, wherein the printing (20) is configured as a ring on the lower side (11b) and with a radial ring thickness which corresponds to the radial dimensional difference between an upper annular edge (14a) of the operating ring (9) and a lower annular edge (14b) of the operating ring (9).

2. Operating device (6) according to claim 1, **characterised in that** the further partial surface (15) is planar.

3. Operating device (6) according to claim 1, **characterised in that** the further partial surface (15) is uneven.

4. Operating device (6) according to claim 3, **characterised in that** the further partial surface (15) is bulged in a concave manner.

5. Operating device (6) according to one of the preceding claims, **characterised in that** the annular touch surface (9a) is bulged.

6. Operating device (6) according to claim 5, **characterised in that** the annular touch surface (9a) is bulged in a concave manner.

7. Operating device (6) according to claim 4 and claim 6, **characterised in that** the radius of the bulging of the annular touch surface (9a) is equal to the radius of the further partial surface (15).

8. Operating device (6) according to claim 4 and claim 6, **characterised in that** the radius of the bulging of the annular touch surface (9a) is different from, in particular is larger than, the radius of the further partial surface (15).

9. Operating device (6) according to one of the preceding claims, **characterised in that** the printing (20) is configured only as the ring on the lower side (11b).

10. Operating device (6) according to one of the preceding claims, **characterised in that** a touch sensor system (16) is arranged between the cover (10) and the separate visual display unit (7).

11. Operating device (6) according to one of the preceding claims, **characterised in that** an upper annular edge (14a) of the operating ring (9) is formed by the upper edge of the depression (18).

12. Operating device (6) according to one of the preceding claims, **characterised in that** an upper annular edge (14a) of the operating ring (9) has a diameter (d1) of between 60 mm and 90 mm, in particular of between 70 mm and 80 mm.

13. Operating device (6) according to one of the preceding claims, **characterised in that** a lower annular edge (14b) of the operating ring (9) has a diameter (d2) of between 45 mm and 60 mm, in particular of between 50 mm and 60 mm.

14. Operating device (6) according to one of the preceding claims, **characterised in that** the further partial surface (15) of the recess wall (13) is configured as a touch-sensitive operating region (17).

## Revendications

1. Dispositif de commande (6) pour un appareil électroménager (1), comprenant une unité d'affichage optique (7), et un anneau de commande tactile (9) agissant comme une zone de commande tactile, qui est formée dans la zone de surface de l'unité d'affichage optique (7),
dans lequel l'unité d'affichage optique (7) est recouverte avec un recouvrement transparent, séparé de celle-ci,
dans lequel un creux (12) est formé sur un côté supérieur (11a) du recouvrement (10), qui est délimité par une paroi de creux (13), dans lequel le creux (12) est configuré sous forme d'une cavité cohérente en forme de cratère (18), vu dans son ensemble, de telle sorte que la paroi de creux (13) entière est formée au-dessous du niveau d'une zone de surface du côté supérieur (11a) adjacente à la cavité (18), dans lequel au moins une surface partielle annulaire supérieure (14) de la paroi de creux (13) forme une surface de contact (9a) de l'anneau de commande (9), et la paroi de creux (13) comprend une autre surface partielle (15) qui se raccorde à la surface de contact (9a) dans le bas de celle-ci,
**caractérisé en ce qu'**une impression (20) est réalisée sur une face inférieure (17b) du recouvrement (10), par laquelle la surface de l'anneau de commande (9) est **caractérisée** visuellement sur la face supérieure (11a),
dans lequel l'impression (20) est formée sous forme d'anneau sur la face inférieure (11b) et avec une épaisseur d'anneau radiale, qui correspond à la différence de dimension radiale entre un bord d'anneau supérieur (14a) de l'anneau de commande (9) et un bord d'anneau inférieur (14b) de l'anneau de commande (9).

2. Dispositif de commande (6) selon la revendication 1, **caractérisé en ce que** l'autre surface partielle (15) est plane.

3. Dispositif de commande (6) selon la revendication 1, **caractérisé en ce que** l'autre surface partielle (15) est irrégulière.

4. Dispositif de commande (6) selon la revendication 3, **caractérisé en ce que** l'autre surface partielle (15) est courbée de façon concave.

5. Dispositif de commande (6) selon l'une des revendications précédentes, **caractérisé en ce que** la surface de contact annulaire (9a) est courbée.

6. Dispositif de commande (6) selon la revendication 5, **caractérisé en ce que** la courbure de la surface de contact annulaire (9a) est concave.

7. Dispositif de commande (6) selon la revendication 4 et selon la revendication 6, **caractérisé en ce que** le rayon de la courbure de la surface de contact annulaire (9a) est égal au rayon de l'autre surface partielle (15).

8. Dispositif de commande (6) selon la revendication 4 et selon la revendication 6, **caractérisé en ce que** le rayon de la courbure de la surface de contact annulaire (9a) est différent, en particulier plus grand que le rayon de l'autre surface partielle (15).

9. Dispositif de commande (6) selon l'une des revendications précédentes, **caractérisé en ce que** l'impression (20) est formée uniquement comme l'anneau sur la face inférieure (11b).

10. Dispositif de commande (6) selon l'une des revendications précédentes, **caractérisé en ce qu'**un capteur de contact (16) est disposé entre le recouvrement (10) et l'unité d'affichage optique (7) séparée de celui-ci.

11. Dispositif de commande (6) selon l'une des revendications précédentes, **caractérisé en ce qu'**un bord d'anneau supérieur (14a) de l'anneau de commande (9) est formé par le bord supérieur de la cavité (18).

12. Dispositif de commande (6) selon l'une des revendications précédentes, **caractérisé en ce qu'**un bord d'anneau supérieur (14a) de l'anneau de commande (9) a un diamètre (d1) entre 60 mm et 90 mm, en particulier entre 70 mm et 80 mm.

13. Dispositif de commande (6) selon l'une des revendications précédentes, **caractérisé en ce qu'**un bord d'anneau inférieur (14b) de l'anneau de commande (9) a un diamètre (d2) entre 45 mm et 60 mm, en particulier entre 50 mm et 60 mm.

14. Dispositif de commande (6) selon l'une des revendications précédentes, **caractérisé en ce que** l'autre surface partielle (15) de la paroi de creux (13) est conçue sous forme de zone de commande tactile (17).
